# EUROPÄISCHE PATENTANMELDUNG

(11) **EP 3 653 548 A1**
(43) Veröffentlichungstag der Anmeldung: **20.05.2020**
(21) Anmeldenummer: 18206077.2
(22) Anmeldetag: 13.11.2018
(51) Int. Cl.: B65G 47/71, B65G 54/02, B65G 47/96

(54) **LINEARSORTIERER MIT VARIABEL LAUFENDEN QUERGURT-TRÄGERN**

(71) Anmelder: Siemens Aktiengesellschaft, 80333 München (DE)
(72) Erfinder: Aschpurwis, Carsten, 78464 Konstanz (DE)

(57) **Zusammenfassung**

Es wird ein Linearsortierer (1) zur Sortierung von Stückgütern (10) umfassend einen geschlossenen Umlauf auf Schienen (30) einer Mehrzahl von Quergurt-Läufern (21) vorgeschlagen, bei dem die Stückgüter (10) auf einem oberen Trum (31) auf den Quergurt-Läufern (21) transportiert und durch Ausschleusen an entsprechende Zielstellen (11, 11') sortiert werden und die Quergurt-Läufer (21) auf einem unteren Trum (32) zurücklaufen. Die Quergut-Läufer (21) werden dabei durch Linearmotoren angetrieben. Um die Wartung zu vereinfachen und weniger Quergurt-Läufer (21) als Ersatzkomponenten bereit halten zu müssen, werden die Linearmotoren für die Quergurt-Läufer (21) so angesteuert, dass beim Zurücklaufen der Quergurt-Läufer (21) auf dem unteren Trum (32) ihre Geschwindigkeit (Vret) höher (Vret > Vsort) ist als die Geschwindigkeit (Vsort) der Quergurt-Läufer (21) beim Lauf auf dem oberen Trum (31).

## Beschreibung

Die vorliegende Erfindung bezieht sich auf einen Linearsortierer mit variabel laufenden Quergurt-Trägern gemäss dem Patentanspruch 1.

Der Erfindung liegt das Gebiet Sortiersysteme zugrunde. Sortiersysteme identifizieren in ungeordneter Reihenfolge ankommendes, heterogen geformtes und vereinzeltes Stückgut, beispielsweise Pakete (in Paket-Sortierzentren), Gepäckstücke (in Flughafenterminals) oder Kommissionsware (in Versandhäusern), aufgrund vorgegebener Unterscheidungskriterien und verteilen sie auf festgelegte Ziele. Solche Sortiersysteme bestehen aus Sortieranlagen, die mit entsprechenden organisatorischen Abläufen und angepassten Betriebsstrategien, welche in zugehörigen Steuerungen bei den Sortieranlagen bzw. Sortiersystemen implementiert sind, die Systemfunktionalität der Sortiersysteme gewährleisten.

Ein solcher Sorter selbst besteht aus einer Einschleusung, einem Verteilförderer und End-/Zielstellen für das zu verteilende Stückgut.

Bei technikorientierter Klassifizierung von Verteilförderern nach den Kriterien Belegungsart, Wirkprinzip einer Ausschleusung des Stückgutes und fördertechnisches Prinzip werden insbesondere Verteilförderer mit einer
- Quergurt- bzw. Querbandtechnologie oder einer
- Kippschalentechnologie unterschieden. Diese werden kurz als Quergurtförderer / Querbandsorter oder Kippschalensorter bezeichnet. Diese können als horizontale Kreis-Sorter oder als vertikale Kreis-Sorter (Linear-Sorter, Linearsortierer) ausgeführt sein.

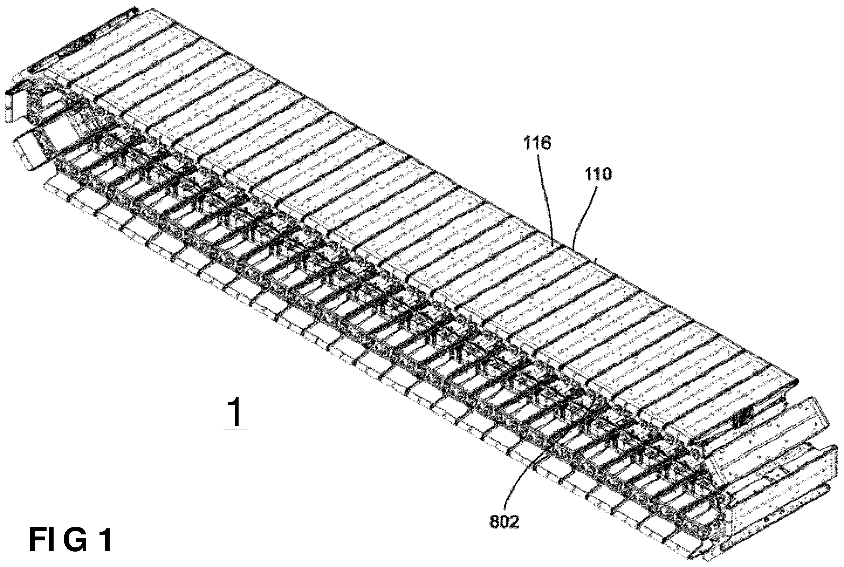

In den Schriften [1] bis [6] sind sogenannte Linearsortierer (engl. Line Sorter) offenbart, bei denen die Läufer-Länge kleiner als die maximale transportierbare Gut-Länge ist. Diesen Linearsortierern ist gemeinsam, dass sich eine Mehrzahl von Quergurt-Trägern (englisch cross belt carrier; im folgenden jedoch stets synonym mit Quergurt-Läufer bezeichnet) auf einem geschlossenen Umlauf befindet. Sind die Quergur-Läufer auf dem oberen Trum, tragen sie zu sortierende Stückgüter. Die Quergurte sind typischerweise (in Sorter-Richtung) schmaler als das zu sortierende Stückgut. Stückgut, das auf den Sorter übernommen wird, liegt also in den meisten Fällen auf mehr als einem Quergurt-Läufer auf. Für die Ansteuerung der Quergurte bei der Übernahme oder Abgabe der Güter ist es nur wichtig zu wissen, welche Quergurt-Läufer unter dem einen Stückgut liegen. Die Quergurte der betreffenden Quergurt-Läufer werden dazu entsprechend angesteuert. Dabei müssen ggf. mehrere Quergurte synchron betätigt werden, wenn ein grösseres Stückgut auf mehreren Quergut-Läufern und somit auf mehreren Quergurten aufliegt. Auf dem unteren Trum laufen die Quergutläufer zurück. In der FIG 1 ist ein solcher Linearsortierer dargestellt, wie er im Dokument [4] gezeigt ist. Diese Mehrzahl von Quergurt-Läufer wird durch ein Linearmotorsystem angetrieben. Den verschiedenen in den Dokumenten [1] bis [6] offenbarten Dokumenten ist gemeinsam, dass die einzelnen Quergurt-Läufer miteinander mechanisch gekoppelt sind. In den Dokumenten [1] bis [3] ist diese Kopplung auch in den betreffenden unabhängigen Ansprüchen enthalten.

Eine Sortieranlage mit so gekoppelten Quergut-Läufern hat verschiedene Nachteile, insbesondere:
i) Die Quergurt-Läufer und vor allem die Quergurte sowie ihre Antriebe sind einem Verschleiss ausgesetzt und müssen daher im Bedarfsfall ersetzt werden.
   Ein Ersatz von Quergurt-Läufern bedingt eine Still-Legung der Sortieranlage. Wegen der gegenseitigen Kopplung der Quergurt-Läufer ist der Ersatz von Quergurt und ihren Antrieben praktisch nicht zu bewerkstelligen und dies bedingt daher einen Ausbau eines defekten Quergurt-Läufers und einen Einbau eines intakten Quergurt-Läufers. Dies ist mit einem beträchtlichen Aufwand und mit entsprechenden Stillstandszeiten verbunden.
ii) Typischerweise wird stets nur der Quergurt-Läufer auf dem oberen Trum zum Transport der Stückgüter verwendet. Die auf dem unteren Trum befindlichen Quergurt-Läufer bewegen sich leer zurück, bis sie auf dem oberen Trum für einen weiteren Transport eines Stückgutes zum Einsatz kommen. Dies stellt eine Verschwendung von Ressourcen eines Linearsortierers dar.
iii) Da die Stillstandszeiten der Sortieranlage möglichst gering sein sollten, müssen die Quergurt-Läufer beim Betreiber der Sortieranlage vorrätig sein. Diese erfordert nicht nur einen Lagerplatz, sondern ist auch aufwendig bezüglich der Kosten für das Bereithalten solcher Quergurt-Läufer.

Der vorliegenden Erfindung liegt daher die Aufgabe zugrunde, einen Linearsortierer der vorgenannten Art anzugeben, der ohne die vorstehend aufgeführten Nachteile betrieben werden kann.

Diese Aufgabe wird durch die im Patentanspruch 1 angegebenen Maßnahmen gelöst. Vorteilhafte Ausgestaltungen der Erfindung sind in weiteren Ansprüchen angegeben.

Die erfindungsgemäße Lösung sieht einen Linearsortierer vor zur Sortierung von Stückgütern umfassend: Einen geschlossenen Umlauf einer Mehrzahl von Quergurt-Läufern,
- wobei die Stückgüter auf einem oberen Trum auf den Quergurt-Läufern transportiert und durch Ausschleusen an entsprechende Zielstellen sortiert werden und
- wobei die Quergurt-Läufer auf einem unteren Trum zurücklaufen und
- wobei pro Quergurt-Läufer ein Antriebsmittel vorgesehen ist, das so ansteuerbar ist, dass jeder Quergurt-Läufer auf dem Umlauf je eine individuelle Geschwindigkeit aufweisen kann.

So können sich die folgenden Vorteile zusätzlich ergeben:
i) Der inhärente Nachteil eines Linearsortierers ist, dass typischerweise immer nur der obere Trum zum Transport der Güter verwendet wird und der untere Trum mit leeren Quergurt-Läufern belegt ist, kann durch eine höhere Rücklaufgeschwindigkeit der Quergurt-Läufer deutlich behoben werden. Dadurch kann die Anzahl der Quergurt-Läufer pro Linearsortierer reduziert werden.
ii) Durch eine individuelle Ansteuerung des Antriebsmittels eines jeden Quergurt-Läufers kann der Abstand zwischen den Quergurt-Läufern auf dem oberen Trum so eingestellt werden, dass aufgrund einer Messung der Dimension (=Größe) und/oder der zeitabhängigen Position des zu befördernden Stückgutes die nötige Anzahl von Quergurt-Läufer für das betreffende Stückgut festgelegt werden. Inhärent für jedes Sortiersystem und somit auch für Linearsortierer ist, dass die zu sortierenden Stückgüter ohnehin vorher bezüglich Sortierziel und Dimension durch Detektoren erfasst wurden und in einer Steuerung/Regelung bzw. einem IT-System gespeichert sind und dem entsprechend können die erfassten Daten für die Ansteuerung der Quergut-Läufer verwendet werden. Ebenso inhärent für jeden Linearsortierer ist, dass die Lage eines jeden Quergurt-Läufers auf dem oberen Trum stets erfasst wird und in einem Regelsystem oder in einem IT-System gespeichert ist, da der Ort der Ausschleusung und damit der Betätigung des Quergurtes essentiell für die Funktion des Linearsortiers ist. Die vorgenannte Einstellung des Abstandes zwischen den Quergurt-Läufern erlaubt, die Stückgüter unabhängig von ihrer Dimension dem Linearsortierer zuzuführen. Hier ist auch der Sonderfall enthalten, wo ein relativ kleines Stückgut zugeführt wird, so dass nur ein einziger Quergurt-Läufer vorzusehen ist. Die vorstehend eingeführte Anzahl ist diesem Fall 1.
iii) Durch eine individuelle Ansteuerung des Antriebsmittels eines jeden Quergurt-Läufers können wahlweise auf dem oberen Trum die Quergurt-Läufer in einem konstanten Abstand «constant gap» oder in konstanter Nutzungsbreite «constant pitch» gefahren werden. Inhärent für jedes Sortiersystem und somit auch für Linearsortierer ist, dass die zu sortierenden Stückgüter ohnehin vorher bezüglich Sortierziel und Dimension durch Detektoren erfasst wurden und in einer Steuerung bzw. einem IT-System gespeichert sind und dem entsprechend können die erfassten Daten für die Ansteuerung der Quergut-Läufer verwendet werden.
iv) Als Antriebsmittel der Quergurt-Läufer können Linearmotoren vorgesehen werden, so dass die Permanentmagnete in den Quergurt-Läufern eingebaut sind und die ein elektromagnetisches Wechselfeld erzeugende Folge von Elektromagneten in den beiden Trums sowie in den Wendestelle genannten Bereichen angeordnet ist.
v) Alternativ kann als Antriebsmittel für jeden Quergurt-Läufer ein eigener Antrieb mit zB einem rotativen Elektromotor vorgesehen sein. Die Energie-Übertragung vom tragenden Gestell auf die Quergurt-Läufer kann wahlweise über Stromschienen oder kontaktlos über Induktion erfolgen, dabei ist pro Quergurt-Läufer ein Akkumulator vorzusehen.
vi) Weitere Möglichkeiten des Antriebs der Quergurt-Läufer:
   Es können Reibräder am tragenden Gestell vorgesehen werden, die auf eine Kontaktfläche der Quergurt-Läufer wirken. Ebenso ist es möglich, dass sich die Quergurt-Läufer zB auf den geraden Strecken in ein formschlüssiges Medium (Kette, Riemen) einklinken. In dem Fall läuft dieses Medium im oberen Trum mit vₛₒᵣₜ und im unteren Trum mit vᵣₑₜ. Die Beschleunigung in den Umlenkungen kann mit den oben genannten Techniken umgesetzt werden. Auch im Fall eines formschlüssigen Mediums sind die Quergurt-Läufer nicht als festgekoppelt anzusehen, da diese Kopplung auf den Umlenkungen jeweils entfällt. Die Schriften [1] bis [6] sehen eine feste Kopplung über den gesamten Umlauf vor.

Weitere vorteilhafte Ausführungsformen sind in den abhängigen Ansprüchen angegeben.

Die Erfindung wird nachfolgend anhand der Zeichnung beispielsweise näher erläutert. Dabei zeigen:
Figur 1 Linearsortierer mit Quergurt-Trägern gemäss den Dokumenten [4] und [5] Stand der Technik;
Figur 2 Linearsortierer mit Quergurt-Läufern in einer Ausführungsform der vorliegenden Erfindung.

In FIG 1 ist der notorische Stand der Technik mit einem Linearsortierer 1 dargestellt, bei dem die Quergurt-Läufer (=carriage) 110 fest miteinander gekoppelt sind. Jeder Quergurt-Läufer 110 umfasst einen Quergurt (=cross belt) 116. Dieser Stand der Technik findet sich auch in der erst kürzlich veröffentlichten Patentanmeldung gemäss dem Dokument [6], bei der für den Antrieb der Quergurt-Läufer ebenfalls ein Linearmotor vorgesehen ist, siehe beispielsweise FIG 3 in im genannten Dokument [6]. Lediglich um den Bezug zu den Dokumenten [4] und [5] einfach herstellen zu können, sind die Bezugszeichen jener Dokumente verwendet worden. Bezüglich der Anordnung der Zielstellen längs eines Linearsorters wird auf FIG 1 im Dokument [3] verwiesen. Die Zielstellen werden in diesem Dokument mit dem Begriff «discharge» versehen.

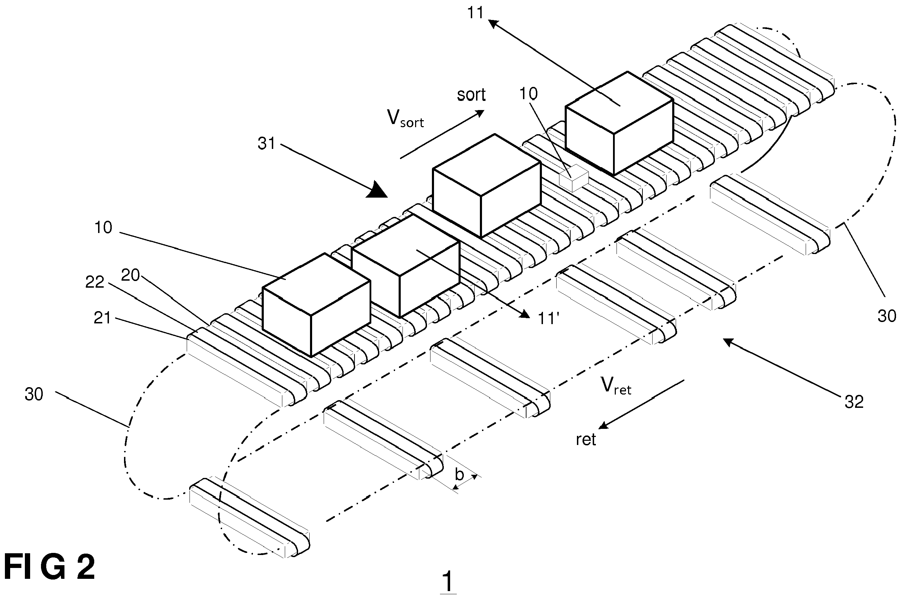

Figur 2 zeigt einen Linearsortierer 1 gemäss einer Ausführungsform der vorliegenden Erfindung. Auf einer Umlaufbahn mit Führungsschienen 30 enthält (nicht detailliert dargestellt in FIG 2) laufen die Quergurt-Läufer 21 untereinander insoweit frei, als jeder Quergurt-Läufer individuell durch Antriebsmittel angetrieben wird. Das Antriebsmittel kann ein klassischer Elektromotor sein. Bevorzugt wird jedoch Linearmotor (nicht dargestellt in FIG 2). Der individuelle Antrieb der Quergurt-Läufer setzt selbstverständlich voraus, dass die einzelnen Quergurt-Läufer 21 nicht mechanisch mit einander gekoppelt sind, also entgegen dem notorischen Stand der Technik gemäss den Dokumenten [1] bis [6].

Wegen dem Entfall der Kopplung der einzelnen Quergurt-Läufer 21 ist hinsichtlich der Spurführung längs der Umlaufbahn 31 folgendes vorzukehren:
Um bei sogenannt «schmalen» oder «kurzen» Quergurt-Läufern 21 eine hinreichende Spurführung zu erreichen, muss die Lagerung des Quergurt-Läufers 21 in Sortierrichtung sort länger sein als dies der Breite b eines Quergurt-Läufers 21 entspricht. Das kann dadurch erreicht werden, dass ein Quergurt-Läufer 21 immer nur auf einer Seite in der Schiene 30 geführt wird und der nachfolgende Quergurt-Läufer 21 auf der anderen Seite der Schiene 30 geführt wird. Auf diese Weise ist die Breite der Führung in der Schiene etwas weniger als das Dreifache der Breite b eines Quergurt-Läufers 21. Zusätzlich kann vorgesehen werden, dass gegenüber der breiten Führung nur eine Rolle in die Führung 30 eingreift, wodurch die Breite der Führung 30 noch etwas weniger wird, aber immer noch mehr als das Doppelte der Breite b eines Quergurt-Läufers 21 darstellt.

Wenn nun entgegen dem genannten notorischen Stand der Technik die Quergurt-Läufer 21 NICHT gekoppelt sind, sondern lose hintereinander herlaufen, kann die Anzahl der Quergurt-Läufer 21 reduziert werden. Auf dem oberen Trum 31 befindet sich eine Serie von hintereinander herfahrenden Quergurt-Läufern 21, deren Abstand 20 ebenfalls dank der individuellen Ansteuerung eines jeden Linearmotors pro Quergurt-Läufer 21 einstellbar ist. Sobald die Stückgüter 10 am Ende der Sortierstrecke in eine Ausschleusrichtung 11, 11' ausgeschleust wurden, werden die Quergurt-Läufer 21 nacheinander stark beschleunigt und laufen mit einer deutlich höheren Geschwindigkeit Vᵣₑₜ auf dem unteren Trum 32 zurück. Diese höhere Geschwindigkeit Vᵣₑₜ bezieht sich auf die typische (kleinere) Sortier-Geschwindigkeit Vₛₒᵣₜ. Dabei entstehen zwischen den Quergurt-Läufern Lücken. Die Anzahl der Quergurt-Läufer 21 über die gesamte Strecke ist also deutlich geringer als bei endlos gekoppelten Quergurt-Läufern 21. Zum Begriff Trum wird an dieser Stelle zu dessen Erläuterung auf das Dokument [8] verwiesen.

Zum Begriff Linearmotor wird einerseits auf das Dokument [7] verwiesen. Andererseits wird der Linearmotor pro Quergurt-Läufer 21 gebildet durch einen Permanentmagneten, der im Quergurt-Läufer 21 fest angeordnet ist und durch eine Folge von ein elektromagnetisches Wechselfeld erzeugenden Elektromagneten. Diese Elektromagnete sind aufeinanderfolgend angeordnet in den beiden Trums 31 und 32 sowie in den hier Wendestelle genannten Bereichen, die die beiden Trums 31 und 32 verbinden.

Kurz vor dem "Auftauchen" der Quergurt-Läufer 21 auf dem oberen Trum 31 zum erneuten Beladen schließen die Rückläufer auf die oben lückenlos laufende Kolonne der Quergurt-Läufer 21 auf. Aber zumindest ist die zeitabhängige Position der Läufer/Träger auf das zu übernehmende Gut abgestimmt Das vorgenannte "Auftauchen" erfolgt an der oben eingeführten Wendestelle.

In besonders vorteilhafterweise kann eine Mehrzahl von Quergurt-Läufern 21 auf dem oberen Trum 31 zu einer Gruppe zusammengefasst werden, um grössere Stückgüter auf dem Linearsorter 1 zu verarbeiten. Grössere Stückgüter bedeutet, dass ein solches Stückgut auf mehreren Quergurt-Läufern 21 platziert werden muss. Dazu müssen von den zu verarbeitenden Stückgütern 10 ihre Dimension (=Größe) erfasst werden. Mit dieser Dimension und der bekannten Breite b eines Quergurt-Läufers 21 - vgl. FIG 2 - kann die Anzahl benötigter Quergurt-Läufer 21 festgelegt werden. Die Übergabeposition ist konstruktiv und die Übergabezeit eines zu sortierenden Stückgutes auf den Linearförderer ist durch das zugrundeliegende IT-System vorgegeben. Daraus lassen sich die über die Umlenkung vom unteren Trum 32 kommenden Quergurt-Läufer 21 dank der individuellen Ansteuerbarkeit so ansteuern, dass das zu sortierende Stückgut 10 genau auf die festgelegte Anzahl Quergut-Läufer 21 platziert werden kann. Beim vorgesehenen Sortierziel werden dementsprechend alle Quergurte 22 der betreffenden Quergurt-Läufer 21 aktiviert, um das Stückgut in eine der Ausschleusrichtungen 11, 11' auszuschleusen. Die Gruppenbildung ist rein virtuell für ein bestimmtes Stückgut vorgesehen. Nach dem Ausschleusen des Stückgutes sind die freigewordenen Quergut-Läufer nicht mehr einer Gruppe zugehörig.

Die individuelle Ansteuerbarkeit der Quergut-Läufer 21 erlaubt ferner eine Vielzahl von Konfiguration auf dem oberen Trum 31, um die zu sortierenden Stückgüter 1 optimal den Zielstellen zuzuführen. Denkbar ist zB auch eine variabel einstellbare Geschwindigkeit Vₛₒᵣₜ, wobei diese Geschwindigkeit Vₛₒᵣₜ abhängig von der Art, der Masse und der Dimension des zu sortierenden Stückgutes 1 festgelegt werden kann.

Zusammengefasst erlaubt die Erfindung ein freies Umlaufen einer Mehrzahl von Quergurt-Läufern 21 mit einstellbaren Abständen und einstellbaren individuellen Geschwindigkeiten, vergleichbar mit den Autos auf einer Spur einer Autobahn. Das Überholen von Quergurt-Läufern 21 ist bei einem Linearsortierer 1 quasi per Definition ausgeschlossen.

### Liste der Bezugszeichen, Glossar

- 1: Linearsorter
- 10: Stückgut, Sendung
- 11,: 11' Ausschleusrichtung
- 20: Zwischenraum, Abstand; gap
- 21: Quergurt-Läufer, Quergurt-Träger, Läufer, carrier
- 22: Quergurt; crossbelt
- 30: Führungsschiene, Führung,
- 31: oberer Trum
- 32: unterer Trum
- 108: Gurt, belt
- 110: Quergurt-Läufer, Läufer, Quergurt-Träger, Träger; carriage gemäss dem Stand der Technik,
- 116: Quergurt; cross belt
- 802: Förderteil; conveyance portion
- ret: Rücklaufrichtung
- sort: Sortierrichtung
- Vₛₒᵣₜ: Geschwindigkeit der Quergurt-Läufer in Sortierrichtung
- Vᵣₑₜ: Geschwindigkeit der Quergurt-Läufer beim Rücklauf

### Liste der zitierten Dokumente

[1] WO 2016/206695 A1
   «LINE SORTER»;
   BEUMER GROUP A/S; DK-8200 Aarhus N
[2] WO 2017/092763 A1
   «SORTER WITH REDUCED POLYGON EFFECT»;
   BEUMER GROUP A/S; DK-8200 Aarhus N
[3] WO 2017/108048 A1
   «LINE SORTER WITH ADJUSTABLE TRACK LENGTH»;
   BEUMER GROUP A/S; DK-8200 Aarhus N
[4] US 9,809,388 B2 «CROSS BELT SLAT SORTER»; Bastian Solutions, LLC, Indianapolis UN (US)
[5] US 9,409,716 B2
   «CROSS BELT SLAT SORTER»;
   Bastian Solutions, LLC, Indianapolis UN (US)
[6] US 2018/0170690 A1
   «LINE SORTER»;
   BEUMER Group A/S, Aarhus N (DK)
[7] Linearmotor
   https://de.wikipedia.org/wiki/Linearmotor
[8] Trum
   Teil oder Zweig eines laufenden Zugorgans bezeichnet https://de.wikipedia.org/wiki/Trum (Maschinenbau)

## Patentansprüche

1. Linearsortierer (1) zur Sortierung von Stückgütern (10) umfassend einen geschlossenen Umlauf (30) einer Mehrzahl von Quergurt-Läufern (21)
- wobei die Stückgüter (10) auf einem oberen Trum (31) auf den Quergurt-Läufern (21) in einer Sortierrichtung transportiert und durch Ausschleusen an entsprechende Zielstellen sortiert werden und
- wobei die Quergurt-Läufer (21) auf einem unteren Trum (32) zurücklaufen und
**dadurch gekennzeichnet, dass**
pro Quergurt-Läufer (21) ein Antriebsmittel vorgesehen ist, das so ansteuerbar ist, dass jeder Quergurt-Läufer (21) auf dem Umlauf je eine individuelle Geschwindigkeit aufweisen kann.

2. Linearsortierer (1) nach Anspruch 1
**dadurch gekennzeichnet, dass**
eine Mehrzahl von Quergurt-Läufern (21) als Gruppe gebildet wird, so dass die Quergurt-Läufern (21) der Gruppe auf dem oberen Trum (31) eine gleiche einstellbare Geschwindigkeit aufweisen.

3. Linearsortierer (1) nach Anspruch 1 oder 2
**dadurch gekennzeichnet, dass**
die Antriebsmittel für die Quergurt-Läufer (21) so angesteuert werden, dass beim Zurücklaufen der Quergurt-Läufer (21) auf dem unteren Trum (32) ihre Geschwindigkeit (Vᵣₑₜ) höher (Vᵣₑₜ > Vₛₒᵣₜ) ist als die Geschwindigkeit (Vₛₒᵣₜ) der Quergurt-Läufer (31) beim Lauf auf dem oberen Trum (31).

4. Linearsortierer (1) nach einem der Ansprüche 1 bis 3
**dadurch gekennzeichnet, dass**
die Grösse eines zu sortierenden Stückgutes (10) erfasst wird und darauf basierend die Anzahl der zur Übernahme benötigten Quergurt-Läufer (21) festgelegt wird und wobei aufgrund einer vorgegebenen Übergabeposition des Stückgutes (10) auf den Linearsortierer (1) die Antriebsmittel für die benötigten Quergurt-Läufer (21) so angesteuert werden, dass das zu sortierenden Stückgut (10) auf die benötigten Quergurt-Läufer (31) platzierbar ist.

5. Linearsortierer (1) nach einem Ansprüche 1 bis 4,
**dadurch gekennzeichnet, dass**
als Antriebsmittel ein Linearmotor vorgesehen ist, der pro Quergurt-Läufer (21) durch einen Permanentmagneten und durch eine Folge von ein Wechselfeld erzeugenden Elektromagneten gebildet wird, wobei in den beiden Trums (31, 32) die Folge von Elektromagneten und in jedem Quergurt-Läufer (21) die Permanentmagnete angeordnet sind.

6. Linearsortierer (1) nach einem der Ansprüche 1 bis 5,
**dadurch gekennzeichnet, dass**
nach Ausschleusen eines Stückgutes (10) an der in Sortierrichtung (sort) letzten Zielstelle der betreffende Quergurt-Läufer (21) beschleunigt wird.

7. Linearsortierer (1) nach einem der Ansprüche 1 bis 6,
**dadurch gekennzeichnet, dass**
für die Führung der Quergurt-Läufer (21) längs des Umlaufs auf beiden Seiten je eine Schiene (30) vorgesehen ist, wobei die Führung der Quergurt-Läufer (21) mit einem Lager alternierend nur auf einer Schiene (30) vorgesehen ist und sich das Lager über die unmittelbar benachbarten Quergurt-Läufer (21) erstreckt.

8. Linearsortierer (1) nach Anspruch 7,
**dadurch gekennzeichnet, dass**
auf der dem Lager abgewandten Seite eines jeden Quergurt-Läufers (21) eine Rolle in die andere Schiene (30) eingreift.
